# EUROPÄISCHE PATENTSCHRIFT

(11) **EP 2 228 781 B1**
(45) Veröffentlichungstag und Bekanntmachung des Hinweises auf die Patenterteilung: **06.06.2018**
(21) Anmeldenummer: 10002356.3
(22) Anmeldetag: 08.03.2010
(51) Int. Cl.: G09B 9/00, G09B 9/042, G09B 9/16, B66C 21/00

(54) **Vorrichtung zum Bewegen eines Prüfkörpers sowie Verfahren zum Prüfen oder Charakterisieren von Fahrerassistenzsystemen**
Device for moving a test body and method for testing or characterising driver assistance systems
Dispositif de déplacement d'une éprouvette ainsi que procédé de vérification ou de caractérisation de systèmes d'assistance au conducteur

(30) Priorität: 09.03.2009 DE 102009012281
(43) Veröffentlichungstag der Anmeldung: 15.09.2010
(73) Patentinhaber: Audi AG, 85045 Ingolstadt (DE)
(72) Erfinder: Riedel, Helmut, 86697 Oberhausen (DE); Bleier, Thomas, 85057 Ingolstadt (DE)
(74) Vertreter: Thielmann, Frank

(56) Entgegenhaltungen:
- WO-A1-01/77571
- DE-A1-102007 035 474

## Beschreibung

Die Erfindung betrifft eine Vorrichtung zum Bewegen eines Prüfkörpers. Sie betrifft außerdem ein Verfahren zum Prüfen der Funktion eines Fahrerassistenzsystems eines Kraftfahrzeugs oder zum Charakterisieren eines solchen Fahrerassistenzsystems.

Von Kraftfahrzeugen müssen insbesondere solche Fahrerassistenzsysteme charakterisiert oder deren Funktion geprüft werden, bei denen Sensoren, sei es aktive oder passive Sensoren, zum Erfassen eines Umgebungsbereichs des Kraftfahrzeugs eingesetzt werden. Um die Prüfung beziehungsweise die Charakterisierung von solchen Fahrerassistenzsystemen zu ermöglichen, müssen verschiedene Prüfszenarien durchlaufen werden, die tatsächliche Straßensituationen widerspiegeln. Bei der Prüfung beziehungsweise Charakterisierung werden unterschiedlich gestaltete Prüfkörper verwendet, welche gemäß einer Vorgabe mithilfe einer Bewegungsvorrichtung relativ zum Kraftfahrzeug oder zusammen mit ihm bewegt werden. Solche Prüfkörper können zum Beispiel in Fahrtrichtung, gegen die Fahrtrichtung sowie quer oder schräg zur Fahrtrichtung bewegt werden.

Die Prüfung oder Charakterisierung von Fahrerassistenzsystemen findet ihre Grenzen aufgrund der Ausgestaltung von Bewegungsvorrichtungen, mit deren Hilfe die Prüfkörper bewegt werden. Es ist bisher nicht möglich, die Prüfkörper entlang beliebiger vorbestimmter Trajektorien mit einer beliebigen Geschwindigkeit oder auch einem gewünschten Geschwindigkeitsprofil zu bewegen. Es wäre wünschenswert, eine Bewegungsvorrichtung verfügbar zu haben, mit deren Hilfe eine präzise Bewegung eines Prüfkörpers entlang beliebiger Trajektorien ermöglicht wird.

Ein Verfahren zum Prüfen der Funktion eines Fahrerassistenzsystems ist zum Beispiel aus dem Dokument DE 10 2005 032 334 B4 bekannt. Im Rahmen dieses Verfahrens wird in die Umgebung des Kraftfahrzeugs ein Objekt eingebracht. Dieses Objekt kann mit einem geeigneten Mechanismus kurz vor einem Zusammenstoß mit dem Kraftfahrzeug aus der Fahrbahn des Fahrzeugs entfernt werden.

Die DE 10 2007 035 474 A1 offenbart zu diesem Zweck eine Brückenkonstruktion mit Pfeilern und Schienen für das Bewegen eines Prüfkörpers in zwei Raumrichtungen, nämlich entlang der Schienen senkrecht zu einem Fahrweg sowie senkrecht dazu, um den Prüfkörper nach oben aus dem Fahrweg zu entfernen. Dazu hängt der Prüfkörper an einem Seil, welches bei Bedarf aufgewickelt wird.

Es ist Aufgabe der Erfindung, eine Vorrichtung und ein Verfahren der eingangs genannten Gattung vorzuschlagen, bei welcher und welchem Maßnahmen getroffen sind, die eine präzise Bewegung eines Prüfkörpers entlang gewünschter Trajektorien gewährleisten.

Diese Aufgabe wird erfindungsgemäß durch eine Vorrichtung mit den Merkmalen gemäß Patentanspruch 1 sowie durch ein Verfahren mit den Merkmalen gemäß Patentanspruch 7 gelöst.

Demnach umfasst die erfindungsgemäße Vorrichtung vier Seile sowie zu jedem Seil jeweils eine elektrisch ansteuerbare Auf- und Abwickeleinrichtung zum Auf- beziehungsweise Abwickeln des zugeordneten Seils. Zu jedem Seil ist jeweils ein Tragmast vorgesehen, über welchen das zugeordnete Seil geführt oder durch welchen die zugeordnete Auf- und Abwickeleinrichtung getragen ist. Die Vorrichtung weist außerdem eine Halteeinrichtung auf, an welcher der Prüfkörper befestigbar ist, und welche die vier Seile miteinander koppelt. Zur Vorrichtung gehört auch eine Steuereinrichtung, welche die Auf- und Abwickeleinrichtungen ansteuert. Die Steuereinrichtung empfängt und verarbeitet Positionssignale mit Informationen über die jeweils augenblickliche Position eines Kraftfahrzeugs und Position des Prüfkörpers auf einem Versuchsfeld. Die Steuereinrichtung erzeugt in Abhängigkeit von den Positionssignalen Steuersignale, die die Auf- und Abwickeleinrichtungen zum Auf- beziehungsweise Abwickeln der Seile und hierdurch zum Bewegen des Prüfkörpers in einer vorbestimmten Weise abhängig von der Position des Kraftfahrzeugs veranlassen.

Die erfindungsgemäße Vorrichtung ermöglicht die Bewegung des Prüfkörpers entlang beliebiger gewünschter Trajektorien sowie mit beliebigen Geschwindigkeiten. Durch die Erfindung wird ein völlig neues Konzept bei der Bewegung des Prüfkörpers zum Charakterisieren von Fahrerassistenzsystemen oder zum Prüfen deren Funktion verwirklicht. Erstmals erfolgt nämlich die Bewegung mithilfe einer Tragseilvorrichtung, mit deren Hilfe beliebige Straßensituationen simuliert werden können.

Eine solche Tragseilvorrichtung ist für andere Zwecke (also ohne die zugehörige Steuereinrichtung) bereits aus dem Stand der Technik, zum Beispiel aus der US 6,809,495 B2 oder auch aus der WO 94/22067 und der WO 01/77571 A1, bekannt. Die Erfindung beruht somit auf der Erkenntnis, dass eine solche Tragseilvorrichtung zum Bewegen von Prüfkörpern beim Prüfen oder Charakterisieren von Fahrerassistenzsystemen besonders vorteilhaft verwandt werden kann.

Mit der erfindungsgemäßen Vorrichtung ist es möglich, unterschiedliche Straßensituationen, wie sie täglich vorkommen können, herzustellen. Die Steuereinrichtung kann nämlich Positionssignale mit Informationen über die jeweils momentane Position des Kraftfahrzeugs und auch Signale mit Informationen über die Position des Prüfkörpers auf dem Versuchsfeld empfangen. Bei der Bewegung des Prüfkörpers können somit die Position des Kraftfahrzeugs, seine Bewegungsrichtung sowie seine Geschwindigkeit berücksichtigt werden. Es gelingt dann, kurze Reaktionszeiten bei der Bewegung des Prüfkörpers zu erzielen, dies insbesondere beim Veranlassen einer Kollisionssituation oder einer kollisionsnahen Situation. Dies kann zum Beispiel in folgendem Prüfablauf umgesetzt werden: Ein Prüfkörper befindet sich auf einer Fahrbahn des Kraftfahrzeugs. Das Kraftfahrzeug fährt auf den Prüfkörper zu. Die Steuereinrichtung verarbeitet stets die Positionssignale des Kraftfahrzeugs und wertet den sich ändernden Abstand zwischen dem Prüfkörper und dem Kraftfahrzeug aus. Unterschreitet der Abstand einen vorgegebenen Wert, so veranlasst die Steuereinrichtung, dass der Prüfkörper aus der Fahrbahn des Kraftfahrzeugs herausbewegt wird. Eine solche kollisionsnahe Situation ermöglicht es, Fahrerassistenzsysteme zu charakterisieren oder zu prüfen, welche Sicherheitsmaßnahmen auslösen können. Solche Fahrerassistenzsysteme können auch durch Veranlassen einer Kollisionssituation geprüft oder charakterisiert werden. Hierfür kann zum Beispiel in die Fahrbahn eines fahrenden Kraftfahrzeugs ein Prüfkörper so eingebracht werden, dass es zu einem Zusammenstoß zwischen dem Kraftfahrzeug und dem Prüfkörper kommt.

Da die Steuereinrichtung die Auf- und Abwickeleinrichtungen abhängig von der jeweils augenblicklichen Position des Kraftfahrzeugs ansteuern kann, kann somit auch die Bewegung des Prüfkörpers abhängig von der Position des Kraftfahrzeugs geregelt werden. Diese Regelung kann zum Beispiel derart erfolgen, dass ein vorgegebener Abstand zwischen dem Prüfkörper und dem Kraftfahrzeug eingehalten wird. Dies kann zum Beispiel so aussehen, dass der Prüfkörper stets einen vorgegebenen Abstand zu einem hinterherfahrenden Kraftfahrzeug hat. Eine solche Anordnung beinhaltet einen neuartigen geschlossenen Regelkreis, der den vorgegebenen Abstand zwischen dem Prüfkörper und dem Kraftfahrzeug sowie einen Richtungsvektor des Prüfkörpers als Führungsgrößen beinhaltet. Ein derartiger Regelkreis ermöglicht völlig neue Versuchsabläufe, es kann z.B. eine Stausituation dargestellt werden. Bei dieser Ausführungsform kann der Abstand zwischen dem Prüfkörper und dem Kraftfahrzeug auch zeitlich variiert werden, bis hin zu einem plötzlichen Anhalten des Prüfkörpers, was einen nachfolgenden Aufprall des Kraftfahrzeugs provoziert.

Die Steuereinrichtung kann auch Eingabesignale von einer durch eine Bedienperson bedienbaren Bedieneinrichtung empfangen und Steuersignale in Abhängigkeit von den Eingabesignalen erzeugen. Die Steuersignale bewirken dann eine Ansteuerung der Auf- und Abwickeleinrichtungen und hierdurch eine Bewegung des Prüfkörpers in einer durch die Bedienperson vorgegebenen Weise. Also kann eine Bedienperson eine Bedieneinrichtung, wie zum Beispiel einen Steuerknüppel, bedienen, um eine gewünschte Bewegung des Prüfkörpers zu veranlassen. Diese Ausführungsform beinhaltet insbesondere auch die Einstellung der Geschwindigkeit des Prüfkörpers durch die Bedienperson. Eine Bedienperson kann also den Prüfkörper selbst führen und so gewünschte Straßensituationen auf dem Versuchsfeld veranlassen.

Es können Daten bezüglich wenigstens einer vorgegebenen Trajektorie in der Steuereinrichtung abgelegt sein, und die Steuereinheit kann dann Steuersignale in Abhängigkeit von diesen Daten erzeugen, die eine Bewegung des Prüfkörpers entlang einer abgelegten Trajektorie bewirken. Der Prüfkörper kann somit entlang gewünschter vorbestimmter Trajektorien bewegt werden, ohne dass diese Bewegung durch eine Bedienperson gesteuert werden muss. Die Charakterisierung beziehungsweise die Prüfung der Funktion von Fahrerassistenzsystemen können somit automatisiert erfolgen.

Wie ausgeführt, kann die Steuereinrichtung Positionssignale empfangen, die Informationen über die Position des Kraftfahrzeugs beinhalten. Diese Signale können zum Beispiel vom Kraftfahrzeug selbst gesandt werden, sie können aber auch mithilfe eines D-GPS-Empfängers (Differential Global Positioning System) erzeugt und an die Steuereinrichtung übermittelt werden. Gleichermaßen können die Positionssignale mithilfe von Funkortungssystemen bereitgestellt und übermittelt werden.

Zwar kann die Steuereinrichtung derart ausgelegt sein, dass sie stets die jeweils augenblickliche Position des Prüfkörpers bei der Ansteuerung der Auf- und Abwickeleinrichtungen kennt, dies bedarf jedoch einer komplizierten Berechnung. Deswegen ist bevorzugt vorgesehen, dass eine Positionserfassungseinrichtung im Bereich der Halteeinrichtung vorgesehen ist, und dass die Positionserfassungseinrichtung dazu ausgelegt ist, Signale mit Informationen über die jeweils momentane Position der Halteeinrichtung und somit des Prüfkörpers zu erzeugen und diese Signale an die Steuereinrichtung zu übermitteln. Eine solche Positionserfassungseinrichtung kann zum Beispiel ebenfalls einen D-GPS-Empfänger umfassen. Ergänzend oder alternativ kann ein Funkortungssystem zum Bestimmen der Position des Prüfkörpers eingesetzt werden. Es erhält die Steuereinrichtung also Informationen darüber, wo sich der Prüfkörper momentan befindet. Sie werden der Steuereinrichtung entweder drahtlos oder drahtgebunden - z.B. durch die Seile selbst - übermittelt. Diese Informationen ermöglichen die Regelung der Bewegung des Prüfkörpers sowie die Bewegung desselben entlang vorbestimmter Trajektorien.

Zur Stabilisierung des Prüfkörpers wird vorzugsweise ein Kreisel eingesetzt, welcher mit der Halteeinrichtung verbunden ist. Ein solcher Kreisel kann an einer dem Prüfkörper gegenüberliegenden Seite der Halteeinrichtung angeordnet sein. Auf diesem Wege wird verhindert, dass der Prüfkörper bei Veranlassen einer Bewegung zu pendeln beginnt.

Es können insbesondere Maßnahmen getroffen werden, die gewährleisten, dass eine auf den Prüfkörper zum Beispiel durch das Kraftfahrzeug bei einem Aufprall ausgeübte Kraft nicht oder nur in geringem Maße auf die Seile der Vorrichtung übertragen wird. Eine solche Verringerung der Aufprallenergie kann dadurch erzielt werden, dass eine Verbindung zwischen der Halteeinrichtung und dem Prüfkörper gelöst wird, wenn eine vorbestimmte Kraft auf den Prüfkörper wirkt. Dies kann zum Beispiel durch eine Sollbruchstelle an der Halteeinrichtung erzielt werden. Es kann auch vorgesehen sein, dass der Halteeinrichtung eine Schwenkeinrichtung zugeordnet ist, so dass der Prüfkörper bei Anprall des Kraftfahrzeugs weggeklappt wird. Dies ermöglicht die Reduktion der auf die Seile übertragenen Energie auf ein Minimum.

Bei dem erfindungsgemäßen Verfahren wird ein Prüfkörper gemäß zumindest einer Vorgabe mithilfe einer Bewegungsvorrichtung auf einem Versuchsfeld bewegt. Bei dem Verfahren wird als Bewegungsvorrichtung eine Tragseilvorrichtung mit vier Seilen mit jeweils zugeordneter Auf- und Abwickeleinrichtung verwendet. Erfindungsgemäß wird als Bewegungsvorrichtung die erfindungsgemäße Vorrichtung verwendet.

Die zumindest eine Vorgabe kann beinhalten, dass die Bewegung des Prüfkörpers in Abhängigkeit von der Position des Kraftfahrzeugs eingestellt, insbesondere geregelt, wird. Insbesondere wird die Bewegung des Prüfkörpers so geregelt, dass er einen vorgegebenen Abstand zum Kraftfahrzeug hat. Wie bereits Bezug nehmend auf die Vorrichtung ausgeführt, kann auf diesem Wege zum Beispiel eine Stausituation auf einem Versuchsfeld erzeugt werden, die ständige Reaktionen des Kraftfahrzeugs erfordert.

Die Bewegung des Prüfkörpers kann derart erfolgen, dass eine Kollisionssituation oder eine kollisionsnahe Situation zwischen dem Prüfkörper und dem Kraftfahrzeug geschaffen wird. Solche Kollisionssituationen oder kollisionsnahen Situationen können bei Verwendung der Tragseilvorrichtung beliebig gestaltet werden. Die Erzeugung von solchen Situationen war im Stand der Technik nur beschränkt möglicht; Prüfkörper konnten lediglich in die Fahrbahn des Kraftfahrzeugs eingebracht oder von dieser herausbewegt werden. Bei Verwendung der Tragseilvorrichtung ist es im Vergleich zum Stand der Technik möglich, unterschiedlichste Kollisionssituationen, wie auch kollisionsnahe Situationen zu schaffen.

Bei dem Verfahren kann die auf die Seile übertragene Aufprallenergie bei Veranlassen einer Kollisionssituation dadurch verringert werden, dass der Prüfkörper nach Erfülltsein eines vorbestimmten Auslösekriteriums in eine Fahrtrichtung des Kraftfahrzeugs beschleunigt wird. Diese Beschleunigung erfolgt insbesondere unmittelbar vor dem Zeitpunkt, zu welchem das Kraftfahrzeug auf den Prüfkörper prallen würde. Das Auslösekriterium kann zum Beispiel beinhalten, dass der Abstand zwischen dem Prüfkörper und dem Kraftfahrzeug einen vorgegebenen Schwellwert unterschreitet. Dieser Abstand kann durch eine Steuereinrichtung überwacht werden, die den Prüfkörper nach Unterschreiten des Schwellwerts in Fahrrichtung des Kraftfahrzeugs beschleunigt.

Das Auslösekriterium kann zusätzlich oder alternativ beinhalten, dass ein auf Seiten des Kraftfahrzeugs oder des Prüfkörpers angeordneter Abstands-, Bewegungs- oder Kontaktsensor ein Auslösesignal erzeugt. Dies hat den Vorteil, dass der Prüfkörper quasi zum Zeitpunkt des Zusammenstoßes mit dem Kraftfahrzeug beschleunigt wird.

Die Erfindung wird nun anhand eines bevorzugten Ausführungsbeispiels sowie Bezug nehmend auf die Zeichnung näher erläutert, wobei
- Fig. 1: in schematischer Darstellung eine auf einem Versuchsfeld befindliche Vorrichtung gemäß einer Ausführungsform der Erfindung veranschaulicht und
- Fig. 2: eine schematische Darstellung veranschaulicht, anhand derer die Übertragung von Signalen erläutert wird.

Auf einem Versuchsfeld 10 befindet sich eine Vorrichtung zum Bewegen eines Prüfkörpers 12. Die Vorrichtung umfasst vier Tragmasten 14, die je 30 m hoch sind. Die Tragmasten 14 sind jeweils in einem Eckbereich des Versuchsfelds 10 montiert. Das Versuchsfeld 10 ist ein Quadrat mit den Abmessungen 250 m x 250 m.

Zu jedem Tragmast 14 ist jeweils eine elektrisch ansteuerbare Auf- und Abwickeleinrichtung 16 vorgesehen. Die Auf- und Abwickeleinrichtungen 16 sind jeweils neben dem zugeordneten Tragmast 14 auf dem Boden montiert. Jeder Auf- und Abwickeleinrichtung 16 ist ein Seil 18 zugeordnet, welches mittels der zugeordneten Auf- und Abwickeleinrichtung 16 auf eine Trommel auf- und von dieser abgewickelt werden kann. Die Seile 18 sind jeweils über den zugeordneten Tragmast 14 im Bereich seines höchsten Punktes 20 geführt und sind in einem Koppelpunkt 22 zusammengeführt. Im Koppelpunkt 22 sind die Seile 18 miteinander gekoppelt. Zu diesem Zwecke ist eine Halteeinrichtung 24 vorgesehen, die zum einen die Seile 18 miteinander verbindet und zum anderen zur Befestigung des Prüfkörpers 12 dient.

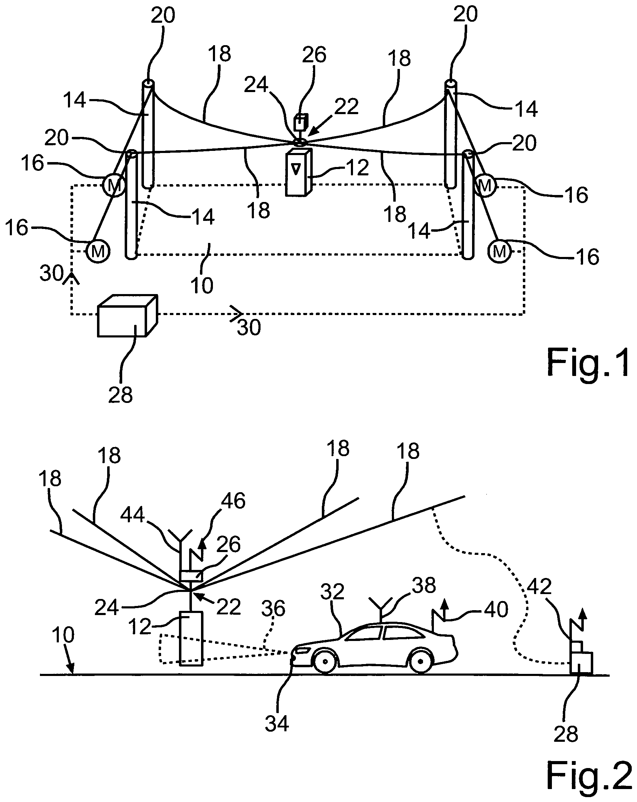

Mit der Halteeinrichtung 24 ist ein in Fig. 1 lediglich schematisch angedeuteter Kreisel 26 gekoppelt, mittels welchem der Prüfkörper 12 bei Bewegung stabilisiert wird. Dabei ist der Kreisel 26 an einer dem Prüfkörper 12 gegenüberliegenden Seite der Halteeinrichtung 24 angeordnet.

Zur Ansteuerung der Auf- und Abwickeleinrichtungen 16 ist eine Steuereinrichtung 28 vorgesehen. Die Steuereinrichtung 28 ist neben dem Versuchsfeld 10 stationär montiert, zum Beispiel in einem Kontrollturm. Durch entsprechende Ansteuerung der Auf- und Abwickeleinrichtungen 16 ist es möglich, den Prüfkörper 12 beliebig im dreidimensionalen Raum, der durch die Abmessungen des Versuchsfelds 10 und die Höhe der Tragmasten 14 begrenzt ist, zu bewegen. Bei der Ansteuerung der Auf- und Abwickeleinrichtungen 16 sendet die Steuereinrichtung 28 Steuersignale 30, die eine Bewegung des Prüfkörpers 12 in einer vorbestimmten Weise veranlassen.

Bezug nehmend auf Fig. 2 befindet sich auf dem Versuchsfeld 10 ein Kraftfahrzeug 32, dessen Fahrerassistenzsysteme auf dem Versuchsfeld 10 geprüft oder charakterisiert werden soll. Bei der Charakterisierung von Fahrerassistenzsystemen werden z.B. ihre Eigenschaften quantitativ ermittelt, wie insbesondere Reaktionszeiten, die Genauigkeit und der gleichen. Bei den Fahrerassistenzsystemen handelt es sich insbesondere um solche Systeme, die Sensoren 34, seien es aktive oder passive Sensoren, aufweisen. Die Sensoren 34 können einen Umgebungsbereich 36 des Kraftfahrzeugs 32 erfassen. Die Fahrerassistenzsysteme können zum Beispiel Sicherheitsmaßnahmen auslösen, wie zum Beispiel Airbags, Sicherheitsbremsen und dergleichen, dies abhängig von durch die Sensoren 34 erfassten Daten.

Um die Fahrerassistenzsysteme zu charakterisieren oder deren Funktion zu prüfen, ist es erforderlich, Straßensituationen, die auf den Straßen tatsächlich vorkommen, auch auf dem Versuchsfeld 10 zu simulieren. Dazu muss der Prüfkörper 12 in einer vorbestimmten Weise bewegt werden. Die in Fig. 1 dargestellte Vorrichtung ermöglicht dabei die Bewegung des Prüfkörpers 12 entlang beliebiger Trajektorien und mit beliebigen Geschwindigkeiten. Zum Beispiel kann eine Regelung der Bewegung des Prüfkörpers 12 dahingehend erfolgen, dass ein vorgegebener Abstand zwischen dem Prüfkörper 12 und dem hinter diesem herfahrenden Kraftfahrzeug 32 eingehalten wird. Dazu benötigt die Steuereinrichtung 28 Informationen über die jeweils augenblickliche Position des Kraftfahrzeugs 32 sowie des Prüfkörpers 12. Zu diesem Zwecke ist in das Kraftfahrzeug 32 ein D-GPS-Empfänger eingebaut, dessen Empfangsantenne in Fig. 2 schematisch dargestellt und mit 38 bezeichnet ist. Das Kraftfahrzeug 32 weist außerdem einen Sender 40 auf, welcher Positionssignale mit Informationen über die Position des Kraftfahrzeugs 32 sendet. Diese Positionssignale empfängt die Steuereinrichtung 28, die zu diesem Zwecke einen Empfänger 42 aufweist. Die Steuereinrichtung 28 kann dann die Positionssignale verarbeiten.

Ebenfalls wird die jeweils augenblickliche Position des Prüfkörpers 12 durch die Steuereinrichtung 28 überwacht. Mit der Halteeinrichtung 24 beziehungsweise mit dem Kreisel 26 ist ebenfalls ein D-GPS-Empfänger 44 verbunden, was in Fig. 2 schematisch angedeutet ist. Signale mit Informationen über die Position des Prüfkörpers 12 werden über eine Sendeantenne 46 gesandt. Diese Signale empfängt dann die Steuereinrichtung 28.

Mit der hier betrachteten Vorrichtung ist es also möglich, unterschiedliche Straßensituationen zu schaffen. Insbesondere können Kollisionssituationen oder auch kollisionsnahe Situationen mittels der Vorrichtung hergestellt werden. Bei Kollisionssituationen ist ein Zusammenstoß zwischen dem Kraftfahrzeug 32 und dem Prüfkörper die Folge. Wäre der Prüfkörper 12 starr mit der Halteeinrichtung 24 verbunden, so würden die auf den Prüfkörper 12 bei einem Anprall des Kraftfahrzeugs 32 wirkenden Kräfte auf die Seile 18 übertragen werden. Um dies zu verhindern, ist der Halteeinrichtung 24 eine Schwenkeinrichtung (in den Figuren nicht dargestellt) zugeordnet. Diese Schwenkeinrichtung kann zum Beispiel gelenkartig so ausgebildet sein, dass der Prüfkörper 12 mit Bezug auf die Halteeinrichtung 24 frei schwenkbar beziehungsweise auf der Halteeinrichtung 24 frei aufgehängt ist. Die Schwenkeinrichtung kann auch einen Energiespeicher, zum Beispiel einen Federmechanismus oder dergleichen, beinhalten, der den Schwenkvorgang beschleunigt. Dies ermöglicht die Reduktion der auf die Seile 18 übertragenen Kräfte bei einem Zusammenstoß des Prüfkörpers 12 mit dem Kraftfahrzeug 32. Zusätzliche Maßnahmen können zum Beispiel darin bestehen, dass an der Halteeinrichtung 24 eine Sollbruchstelle vorgesehen ist. Dann wird die Verbindung zwischen der Halteeinrichtung 24 und dem Prüfkörper 12 dann gelöst, wenn eine vorgegebene Kraft auf den Prüfkörper 12 wirkt. Um die Übertragung der Kräfte auf die Seile 18 bei Veranlassen einer Kollisionssituation auf Minimum zu reduzieren, kann der Prüfkörper 12 nach Erfülltsein eines vorbestimmten Auslösekriterium in die Fahrrichtung des Kraftfahrzeugs 32 beschleunigt werden. Dieses Auslösekriterium kann zum Beispiel das Unterschreiten eines vorgegebenen Abstands zwischen dem Prüfkörper 12 und dem Kraftfahrzeug 32 beinhalten.

Insgesamt wird gemäß dem Beispiel eine Vorrichtung geschaffen, die eine Bewegung des Prüfkörpers 12 entlang beliebiger Trajektorien und mit beliebigen Geschwindigkeiten ermöglicht. Erstmals erfolgt die Bewegung des Prüfkörpers 12 mithilfe einer Tragseilvorrichtung, wie sie insbesondere in Fig. 1 dargestellt ist. Mit einer solchen Vorrichtung können Fahrerassistenzsysteme von Kraftfahrzeugen 32 besonders exakt und zuverlässig charakterisiert und deren Funktion geprüft werden.

## Patentansprüche

1. Vorrichtung zum Prüfen der Funktion eines Fahrerassistenzsystems eines Kraftfahrzeugs (32) oder zum Charakterisieren eines solchen Kraftfahrzeugs (32) auf einem Versuchsfeld, **gekennzeichnet durch**
- vier Seile (18),
- zu jedem Seil (18) jeweils eine elektrisch ansteuerbare Auf- und Abwickeleinrichtung (16) zum Auf- bzw. Abwickeln des zugeordneten Seils (18),
- zu jedem Seil (18) jeweils einen Tragmast (14), über welchen das zugeordnete Seil (18) geführt oder durch welchen die zugeordnete Auf- und Abwickeleinrichtung (16) getragen ist,
- eine Halteeinrichtung (24), an welcher der Prüfkörper (12) befestigbar ist, und welche die vier Seile (18) miteinander koppelt, und
- eine Steuereinrichtung (28) zum Ansteuern der Auf- und Abwickeleinrichtungen (16), wobei die Steuereinrichtung (28) dazu ausgelegt ist, Positionssignale mit Informationen über die jeweils augenblickliche Position eines Kraftfahrzeugs (32) auf dem Versuchsfeld und Position des Prüfkörpers (12) auf dem Versuchsfeld zu empfangen, diese Positionssignale zu verarbeiten und Steuersignale (30) in Abhängigkeit von den Positionssignalen zu erzeugen, die die Auf- und Abwickeleinrichtungen (16) zum Auf- bzw. Abwickeln der Seile (18) und hierdurch zum Bewegen des Prüfkörpers (12) entlang beliebiger gewünschter Trajektorien abhängig von der Position des Kraftfahrzeugs veranlassen.

2. Vorrichtung nach Anspruch 1, **dadurch gekennzeichnet, dass** die Steuereinrichtung (28) ferner dazu ausgelegt ist, Eingabesignale von einer durch eine Bedienperson bedienbaren Bedieneinrichtung zu empfangen und Steuersignale (30) in Abhängigkeit von den Eingabesignalen zu erzeugen, die eine Bewegung des Prüfkörpers (12) in einer durch die Bedienperson vorgegebenen Weise bewirken.

3. Vorrichtung nach Anspruch 1 oder 2, **dadurch gekennzeichnet, dass** Daten bezüglich wenigstens einer vorgegebenen Trajektorie in der Steuereinrichtung (28) abgelegt sind, und dass die Steuereinrichtung (28) ferner dazu ausgelegt ist, Steuersignale (30) in Abhängigkeit von den Daten zu erzeugen, die eine Bewegung des Prüfkörpers (12) entlang der wenigstens einen Trajektorie bewirken.

4. Vorrichtung nach einem der vorhergehenden Ansprüche, **dadurch gekennzeichnet, dass** eine Positionserfassungseinrichtung (44) im Bereich der Halteeinrichtung (24) vorgesehen ist, die dazu ausgelegt ist, Signale mit Informationen über die jeweils augenblickliche Position der Halteeinrichtung (24) zu erzeugen und diese Signale an die Steuereinrichtung (28) zu übermitteln.

5. Vorrichtung nach einem der vorhergehenden Ansprüche, **dadurch gekennzeichnet, dass** ein Kreisel (26) zur Stabilisierung des Prüfkörpers (12) mit der Halteeinrichtung (24) verbunden ist.

6. Vorrichtung nach einem der vorhergehenden Ansprüche, **dadurch gekennzeichnet, dass** die Halteeinrichtung (24) derart lösbar ausgebildet ist, dass eine Verbindung zwischen der Halteeinrichtung (24) und dem Prüfkörper (12) gelöst wird, wenn eine vorbestimmte Kraft auf den Prüfkörper (12) wirkt.

7. Verfahren zum Prüfen der Funktion eines Fahrerassistenzsystems eines Kraftfahrzeugs (32) oder zum Charakterisieren eines solchen Kraftfahrzeugs (32) auf einem Versuchsfeld, bei dem ein Prüfkörper (12) abhängig von einer Position des Kraftfahrzeugs gemäß zumindest einer Vorgabe mithilfe einer Bewegungsvorrichtung bewegt wird, **dadurch gekennzeichnet, dass** als Bewegungsvorrichtung eine Tragseilvorrichtung mit vier Seilen (18) mit jeweils zugeordneter elektrisch ansteuerbarer Auf- und Abwickeleinrichtung (16) zum Auf- bzw. Abwickeln des zugeordneten Seils (18) und einem jeweils zugeordneten Tragmast (14), über welchen das zugeordnete Seil (18) geführt oder durch welchen die zugeordnete Auf- und Abwickeleinrichtung getragen wird, und einer Halteeinrichtung (24), an welcher der Prüfkörper (12) befestigt ist und welche die vier Seile (18) miteinander koppelt, sowie mit einer Steuereinrichtung (28) zum Ansteuern der Auf- und Abwickeleinrichtungen (16) verwendet wird, um eine Bewegung des Prüfkörpers entlang beliebiger gewünschter Trajektorien zu gewährleisten, wobei die Steuereinrichtung (28) Positionssignale mit Informationen über die jeweils augenblickliche Position eines Kraftfahrzeugs (32) auf dem Versuchsfeld und Position des Prüfkörpers (12) auf dem Versuchsfeld empfängt, diese Positionssignale verarbeitet und Steuersignale (30) in Abhängigkeit von den Positionssignalen erzeugt, die die Auf- und Abwickeleinrichtungen (16) zum Auf- bzw. Abwickeln der Seile (18) und hierdurch zum Bewegen des Prüfkörpers (12) abhängig von der Position des Kraftfahrzeugs veranlassen.

8. Verfahren nach Anspruch 7, **dadurch gekennzeichnet, dass** die Bewegung des Prüfkörpers (12) so geregelt wird, dass er einen vorgegebenen Abstand zum Kraftfahrzeug (32) hat.

9. Verfahren nach Anspruch 7 oder 8, **dadurch gekennzeichnet, dass** die Bewegung des Prüfkörpers (12) derart erfolgt, dass eine Kollisionssituation oder eine kollisionsnahe Situation zwischen dem Prüfkörper (12) und dem Kraftfahrzeug (32) geschaffen wird.

10. Verfahren nach Anspruch 9, **dadurch gekennzeichnet, dass** dann, wenn eine Kollisionssituation veranlasst wird, der Prüfkörper (12) nach Erfülltsein eines vorbestimmten Auslösekriteriums in eine Fahrtrichtung des Kraftfahrzeugs (32) beschleunigt wird.

11. Verfahren nach Anspruch 10, **dadurch gekennzeichnet, dass** das Auslösekriterium beinhaltet, dass der Abstand zwischen dem Prüfkörper (12) und dem Kraftfahrzeug (32) einen vorgegebenen Schwellwert unterschreitet.

12. Verfahren nach Anspruch 10 oder 11, **dadurch gekennzeichnet, dass** das Auslösekriterium beinhaltet, dass ein auf Seiten des Kraftfahrzeugs (32) oder des Prüfkörpers (12) angeordneter Sensor ein Auslösesignal erzeugt.

13. Verfahren nach einem der Ansprüche 7 bis 12, **dadurch gekennzeichnet, dass** die zumindest eine Vorgabe beinhaltet, dass der Prüfkörper (12) entlang einer vorgegebenen Trajektorie bewegt wird.

14. Verfahren nach einem der Ansprüche 7 bis 13, **dadurch gekennzeichnet, dass** die zumindest eine Vorgabe durch Steuerbefehle von einer Bedienperson erfolgt, die ein Steuergerät bedient.

## Claims

1. Device for testing the function of a driver assistance system of a motor vehicle (32) or for characterising such a motor vehicle (32) on a testing ground, **characterised by**
- four ropes (18),
- for each rope (18) an electrically controllable winding and unwinding device (16) for winding or unwinding the assigned rope (18),
- for each rope (18) a support mast (14) over which the assigned rope (18) is guided or by which the assigned winding and unwinding device (16) is supported,
- a holding device (24) to which the test body (12) can be fastened and which connects the four ropes (18) together, and
- a control device (28) for controlling the winding and unwinding devices (16), wherein the control device (28) is configured to receive position signals with information on the respective current position of a motor vehicle (32) on the testing ground and the position of the test body (12) on the testing ground, to process these position signals and to generate control signals (30) based on the position signals which cause the winding and unwinding devices (16) to wind or unwind the ropes (18) and thereby move the test body (12) along arbitrary desired trajectories based on the position of the motor vehicle.

2. Device according to claim 1, **characterised in that** the control device (28) is further configured to receive input signals from an operation device operated by an operator and to generate control signals (30) based on the input signals which cause a movement of the test body (12) in a way specified by the operator.

3. Device according to claim 1 or 2, **characterised in that** data for at least one predetermined trajectory are stored in the control device (28), and that the control device (28) is further configured to generate control signals (30) based on the data which cause a movement of the test body (12) along the at least one trajectory.

4. Device according to any of the preceding claims, **characterised in that** a position detection device (44) is provided in the area of the holding device (24) which is configured to generate signals with information on the respective current position of the holding device (24) and to transmit these signals to the control device (28).

5. Device according to any of the preceding claims, **characterised in that** a gyroscope (26) is connected to the holding device (24) for stabilising the test body (12).

6. Device according to any of the preceding claims, **characterised in that** the holding device (24) is configured so as to be detachable such that a connection between the holding device (24) and the test body (12) is broken if a predetermined force acts on the test body (12).

7. Method for testing the function of a driver assistance system of a motor vehicle (32) or for characterising such a motor vehicle (32) on a testing ground, in which a test body (12) is moved by means of a movement device based on a position of the motor vehicle in accordance with at least one specification, **characterised in that** a support rope system is used as the movement device to ensure a movement of the test body along arbitrary desired trajectories, the support rope system having four ropes (18) with an assigned electrically controllable winding and unwinding device (16) for winding or unwinding the assigned rope (18), and an assigned support mast (14) over which the assigned rope (18) is guided or by which the assigned winding and unwinding device is supported, and a holding device (24) to which the test body (12) is fastened and which connects the four ropes (18) together, and a control device (28) for controlling the winding and unwinding devices (16), wherein the control device (28) receives position signals with information on the respective current position of a motor vehicle (32) on the testing ground and the position of the test body (12) on the testing ground, processes these position signals and generates control signals (30) based on the position signals which cause the winding and unwinding devices (16) to wind or unwind the ropes (18) and thereby move the test body (12) based on the position of the motor vehicle.

8. Method according to claim 7, **characterised in that** the movement of the test body (12) is controlled such that it is a predetermined distance from the motor vehicle (32).

9. Method according to claim 7 or 8, **characterised in that** the movement of the test body (12) occurs in a way such that a collision situation or a near-collision situation is created between the test body (12) and the motor vehicle (32).

10. Method according to claim 9, **characterised in that**, when a collision situation is created, the test body (12) is accelerated in a direction of travel of the motor vehicle (32) if a predetermined trigger criteria is met.

11. Method according to claim 10, **characterised in that** the trigger criteria includes that the spacing between the test body (12) and the motor vehicle (32) is below a predetermined threshold.

12. Method according to claim 10 or 11, **characterised in that** the trigger criteria includes that a sensor arranged on the side of the motor vehicle (32) or the test body (12) generates a trigger signal.

13. Method according to any of claims 7 to 12, **characterised in that** the at least one specification includes that the test body (12) is moved along a predetermined trajectory.

14. Method according to any of claims 7 to 13, **characterised in that** the at least one specification is effected through commands by an operator operating a control device.

## Revendications

1. Dispositif de vérification du bon fonctionnement d'un système d'assistance au conducteur d'un véhicule automobile (32) ou de caractérisation d'un tel véhicule automobile (32) sur un terrain d'essai, **caractérisé par**
- quatre câbles (18),
- pour chaque câble (18) respectivement un dispositif d'enroulement et de déroulement (16) pouvant être commandé électriquement pour l'enroulement ou le déroulement du câble (18) associé,
- pour chaque câble (18) respectivement un mât porteur (14) par lequel le câble (18) associé est guidé ou par lequel le dispositif d'enroulement et de déroulement (16) associé est porté,
- un dispositif de retenue (24) auquel l'éprouvette (12) peut être fixée, et lequel couple les quatre câbles (18) entre eux, et
- un dispositif de commande (28) pour la commande des dispositifs d'enroulement et de déroulement (16), dans lequel le dispositif de commande (28) est conçu afin de recevoir des signaux de position avec des informations sur la position momentanée respectivement d'un véhicule automobile (32) sur le terrain d'essai et la position de l'éprouvette (12) sur le terrain d'essai, de traiter ces signaux de position et de générer des signaux de commande (30) en fonction des signaux de position qui incitent les dispositifs d'enroulement et de déroulement (16) à enrouler et dérouler les câbles (18) et ainsi à déplacer l'éprouvette (12) le long de trajectoires souhaitées quelconques en fonction de la position du véhicule automobile.

2. Dispositif selon la revendication 1, **caractérisé en ce que** le dispositif de commande (28) est de plus conçu afin de recevoir des signaux de saisie d'un dispositif de commande pouvant être commandé par un opérateur et de générer des signaux de commande (30) en fonction des signaux de saisie qui provoquent un mouvement de l'éprouvette (12) d'une manière prescrite par l'opérateur.

3. Dispositif selon la revendication 1 ou 2, **caractérisé en ce que** des données relatives au moins à une trajectoire prescrite sont enregistrées dans le dispositif de commande (28), et que le dispositif de commande (28) est de plus conçu afin de générer des signaux de commande (30) en fonction des données qui provoquent un mouvement de l'éprouvette (12) le long d'au moins une trajectoire.

4. Dispositif selon l'une quelconque des revendications précédentes, **caractérisé en ce qu'**un dispositif de détection de position (44) est prévu dans la zone du dispositif de retenue (24) qui est conçu afin de générer des signaux avec des informations sur la position respectivement momentanée du dispositif de retenue (24) et de transmettre ces signaux au dispositif de commande (28).

5. Dispositif selon l'une quelconque des revendications précédentes, **caractérisé en ce qu'**un gyroscope (26) est raccordé pour la stabilisation de l'éprouvette (12) au dispositif de retenue (24).

6. Dispositif selon l'une quelconque des revendications précédentes, **caractérisé en ce que** le dispositif de retenue (24) est réalisé de manière détachable de telle sorte qu'un raccordement entre le dispositif de retenue (24) et l'éprouvette (12) soit détaché lorsqu'une force prédéterminée agit sur l'éprouvette (12).

7. Procédé de vérification du bon fonctionnement d'un système d'assistance au conducteur d'un véhicule automobile (32) ou de caractérisation d'un tel véhicule automobile (32) sur un terrain d'essai, où une éprouvette (12) est déplacée selon une position du véhicule automobile selon au moins une prescription à l'aide d'un dispositif de déplacement, **caractérisé en ce que** comme dispositif de déplacement un dispositif de câble porteur avec quatre câbles (18) avec un dispositif d'enroulement et de déroulement (16) pouvant être commandé électriquement respectivement associé pour l'enroulement ou le déroulement du câble (18) associé et un mât porteur (14) associé respectivement par lequel le câble (18) associé est guidé ou par lequel le dispositif d'enroulement et de déroulement associé est porté, et un dispositif de retenue (24) auquel l'éprouvette (12) est fixée et lequel couple les quatre câbles (18) entre eux, ainsi qu'avec un dispositif de commande (28) pour la commande des dispositifs d'enroulement et de déroulement (16) est utilisé afin de garantir un mouvement de l'éprouvette le long de trajectoires souhaitées quelconques, dans lequel le dispositif de commande (28) reçoit des signaux de position avec des informations sur la position momentanée respectivement d'un véhicule automobile (32) sur le terrain d'essai et la position de l'éprouvette (12) sur le terrain d'essai, traite ces signaux de position et génère des signaux de commande (30) en fonction des signaux de position qui incitent les dispositifs d'enroulement et de déroulement (16) à enrouler et dérouler les câbles (18) et ainsi à déplacer l'éprouvette (12) en fonction de la position du véhicule automobile.

8. Procédé selon la revendication 7, **caractérisé en ce que** le mouvement de l'éprouvette (12) est régulé de sorte qu'il présente une distance prescrite par rapport au véhicule automobile (32).

9. Dispositif selon la revendication 7 ou 8, **caractérisé en ce que** le mouvement de l'éprouvette (12) est effectué de telle manière qu'une situation de collision ou une situation proche de la collision soit créée entre l'éprouvette (12) et le véhicule automobile (32).

10. Procédé selon la revendication 9, **caractérisé en ce que** lorsqu'une situation de collision est provoquée, l'éprouvette (12) est accélérée après le remplissage d'un critère de déclenchement prédéterminé dans un sens de la marche du véhicule automobile (32).

11. Procédé selon la revendication 10, **caractérisé en ce que** le critère de déclenchement implique que la distance entre l'éprouvette (12) et le véhicule automobile (32) n'atteint pas une valeur seuil prescrite.

12. Procédé selon la revendication 10 ou 11, **caractérisé en ce que** le critère de déclenchement implique qu'un capteur disposé sur des côtés du véhicule automobile (32) ou de l'éprouvette (12) génère un signal de déclenchement.

13. Procédé selon l'une quelconque des revendications 7 à 12, **caractérisé en ce que** l'au moins une prescription implique que l'éprouvette (12) est déplacée le long d'une trajectoire prescrite.

14. Procédé selon l'une quelconque des revendications 7 à 13, **caractérisé en ce que** l'au moins une prescription est effectuée par des ordres de commande d'un opérateur qui commande un appareil de commande.
